# DEMANDE DE BREVET EUROPEEN

(11) **EP 1 557 581 A1**
(43) Date de publication de la demande: **27.07.2005**
(21) Numéro de dépôt: 05300057.6
(22) Date de dépôt: 25.01.2005
(51) Int. Cl.: F16D 48/06, F16D 66/02

(54) **Dispositif de détection d'usure de garnitures d'un disque d'embrayage de véhicule automobile et procédé associé**

(30) Priorité: 26.01.2004 FR 0400709
(71) Demandeur: Renault s.a.s., 92100 Boulogne Billancourt (FR)
(72) Inventeur: Bignon, Christian, 78150 Le Chesnay (FR); Chouchana, Richard, 92220 Bagneux (FR)

(57) **Abrégé**

Un dispositif de détection d'usure de garnitures 15, 21 d'un disque d'embrayage 16 de véhicule automobile comprend un capteur de la position de la butée et un moyen de calcul 22 capable de comparer la position détectée d'une butée de commande d'embrayage 11 au repos, avec une position de référence de la butée 11 pour en déduire l'épaisseur instantanée des garnitures 15, 21. Le disque d'embrayage coopére avec la butée 11 actionnée par des moyens de commande de serrage et de desserrage, la butée pouvant être déplacée entre une position de repos et une position active.

## Description

La présente invention concerne un dispositif de détection d'usure d'un disque d'embrayage de véhicule automobile et un procédé associé.

Un embrayage de véhicule automobile est généralement destiné à commander la transmission d'un couple moteur vers les roues du véhicule automobile par l'intermédiaire d'une boîte de vitesses. L'embrayage peut avoir une position débrayée dans laquelle aucun couple n'est transmis aux roues du véhicule, et une position embrayée dans laquelle tout le couple fourni par le moteur est transmis.

Le passage de la position embrayée à la position débrayée, appelée phase de débrayage, est commandé par le déplacement d'une butée de commande d'embrayage en translation entre une position de repos et une position active. Par un retour à sa position de repos, la butée permet le passage de la position débrayée à la position embrayée, appelée phase d'embrayage. Cette phase d'embrayage est utilisée lors d'un changement de rapport de la boîte de vitesse, pour équilibrer les vitesses de rotation du vilebrequin et d'un arbre d'entrée de la boîte de vitesses. Cette phase d'embrayage est également utilisée lors du démarrage du véhicule, pour mettre en mouvement le véhicule à partir d'une position d'arrêt.

L'embrayage comporte un premier plateau fixé sur le vilebrequin, un disque d'embrayage monté coulissant sur l'arbre d'entrée de l'embrayage et venant frotter contre le premier plateau par l'intermédiaire d'une première garniture. L'embrayage comporte un deuxième plateau apte à coulisser, actionné par la butée de commande d'embrayage pour, dans la position embrayée, venir frotter par l'intermédiaire d'une deuxième garniture le disque d'embrayage et le serrer ainsi entre le premier plateau. Les garnitures sont prévues pour s'user au cours de la vie de l'embrayage.

On connaît, par la demande de brevet EP-A-1 319 857, un système de diagnostic d'usure de garnitures d'un disque d'embrayage de véhicule automobile, coopérant avec des moyens de commande de serrage et de desserrage, apte à déterminer une courbe liant le couple transmissible aux roues du véhicule en fonction de la position des moyens de commande lors d'une phase d'embrayage. Cette courbe de transmissibilité du couple est calculée à partir d'un moyen d'assistance au démarrage en côte libérant un frein de parking lorsque le moyen d'assistance a déterminé que le couple transmis aux roues est suffisant pour entraîner le véhicule en s'opposant à la pesanteur. Une dégradation de la courbe de transmissibilité en dessous d'une certaine valeur informe l'utilisateur du véhicule automobile que les garnitures de l'embrayage sont usées.

Une telle solution présente l'inconvénient d'utiliser les informations d'un frein de parking afin de déterminer si les garnitures de l'embrayage sont usées, l'ensemble des véhicules automobiles n'étant pas équipé, à l'heure actuelle, d'un tel dispositif.

On connaît également, par la demande de brevet US 5 181 593, un dispositif permettant d'indiquer l'usure de garnitures d'un embrayage, comprenant un contacteur disposé entre un carter et une fourchette d'embrayage. Le contacteur délivre un signal lorsque la fourchette d'embrayage, actionnée par une pédale, est en contact avec le carter. Les garnitures de l'embrayage sont considérées comme usées lorsque le contacteur délivre le signal en permanence, même lorsque la pédale est relâchée.

Un tel dispositif présente l'inconvénient de ne pouvoir détecter qu'un unique point d'usure des garnitures de l'embrayage. La détection d'usure de l'embrayage est binaire, ne permettant pas de prévoir à quel moment l'usure totale de l'embrayage sera atteinte.

La présente invention a pour objet un dispositif, pouvant être monté sur tout type de véhicule automobile, permettant de détecter l'usure des garnitures d'un disque d'embrayage.

A cet effet, le dispositif de détection d'usure de garnitures d'un disque d'embrayage de véhicule automobile comprend un capteur de la position de la butée et un moyen de calcul capable de comparer la position détectée de la butée au repos, avec une position de référence de la butée pour en déduire l'épaisseur instantanée des garnitures. Le disque d'embrayage coopére avec la butée de commande d'embrayage actionnée par des moyens de commande de serrage et de desserrage, la butée pouvant être déplacée entre une position de repos et une position active.

Un tel dispositif présente l'avantage de pouvoir être utilisé et monté sur tout type de véhicule automobile. Il n'est pas nécessaire que le véhicule comprenne un dispositif spécifique déterminant au préalable un couple transmissible. Le dispositif présente l'avantage de déterminer l'évolution de l'usure de l'embrayage, d'une manière simplifiée, directement en fonction de la position réelle de la butée de commande d'embrayage.

Un tel dispositif de détection, de construction simple, permet également d'engendrer un coût restreint de fabrication, le dispositif comprenant un capteur de position et un moyen de calcul.

Avantageusement, la position de référence de la butée est la position de la butée au repos lorsque les garnitures sont neuves.

Dans un mode de réalisation, le dispositif comprend des moyens d'affichage pour fournir une information sur l'évolution dans le temps de l'épaisseur des garnitures.

Le moyen de calcul peut recevoir un signal émis par le capteur, le moyen de calcul étant sensible à l'amplitude du signal afin de comparer la position de la butée avec la position de référence de la butée.

Le moyen de calcul comprend avantageusement des moyens de détermination d'une courbe d'usure liant l'usure des garnitures à la distance parcourue par le véhicule.

Les moyens d'affichage peuvent être capable de fournir une information à l'utilisateur lorsque la courbe d'usure atteint une valeur seuil prédéterminée.

L'invention concerne également un procédé de gestion de disque d'embrayage, le disque d'embrayage coopérant avec une butée de commande d'embrayage actionnée par des moyens de commande de serrage et de desserrage, la butée pouvant être déplacée entre une position de repos et une position active, dans lequel on compare la position de la butée à une position de référence de ladite butée, on détermine l'usure des garnitures en fonction l'écart entre la position de la butée et la position de référence de ladite butée, et on détermine une courbe d'usure liant l'usure des garnitures à la distance parcourue.

Dans un mode de mise en oeuvre du procédé, on effectue une extrapolation de la courbe d'usure, et on détermine à partir de l'extrapolation de la courbe d'usure, une distance restant à parcourir pour atteindre une valeur limite d'usure des garnitures de façon à prévoir le moment où une opération de maintenance sur les garnitures de l'embrayage devient nécessaire.

Dans un autre mode de mise en oeuvre du procédé, on modifie la calibration des moyens de commande lorsque l'usure des garnitures atteint une valeur prédéterminée de façon à réduire la vitesse d'usure des garnitures de l'embrayage. On peut avantageusement modifier la calibration des moyens de commande par une fermeture plus rapide de l'embrayage.

On peut avantageusement effectuer une comparaison de la position de la butée de commande d'embrayage par rapport à une position de référence de ladite butée dans une position de repos.

On peut avantageusement appliquer le procédé à un ensemble de véhicules, dont chacun des véhicules effectue des parcours similaires dans le temps.

L'invention sera mieux comprise à l'étude de la description détaillée d'un mode de réalisation nullement limitatif et illustré par les dessins annexés sur lesquels :
- la figure 1 représente une vue en coupe d'un embrayage, dans une position embrayée, comprenant un dispositif de détection d'usure selon un aspect de l'invention,
- la figure 2 représente une vue en coupe d'un embrayage, dans une position débrayée, comprenant un dispositif de détection d'usure selon un aspect de l'invention,
- la figure 3 représente une courbe liant l'usure des garnitures en fonction de la distance parcourue par un véhicule automobile muni d'un dispositif de détection de l'usure selon un aspect de l'invention, et,
- la figure 4 représente des courbes liant l'usure de l'embrayage en fonction de la distance parcourue par un véhicule automobile muni d'un dispositif de détection selon différentes calibrations des moyens de commande de l'embrayage.

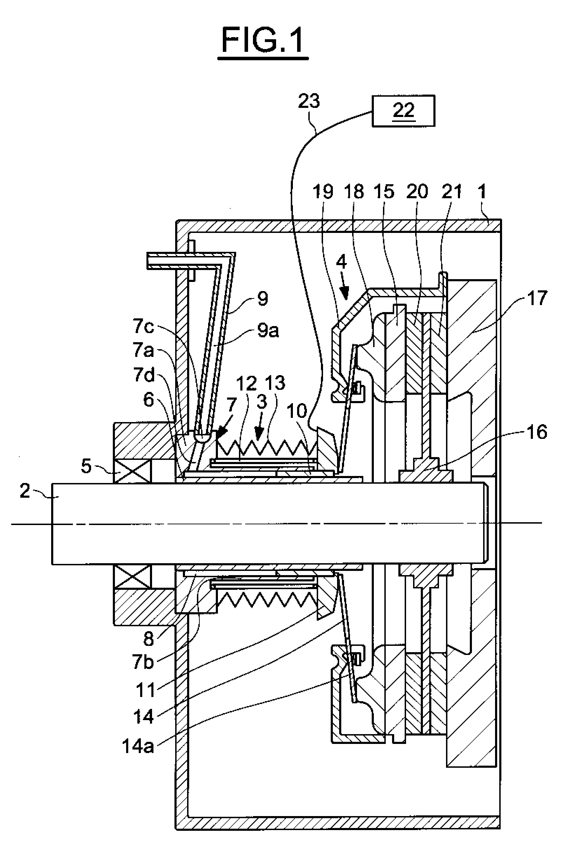

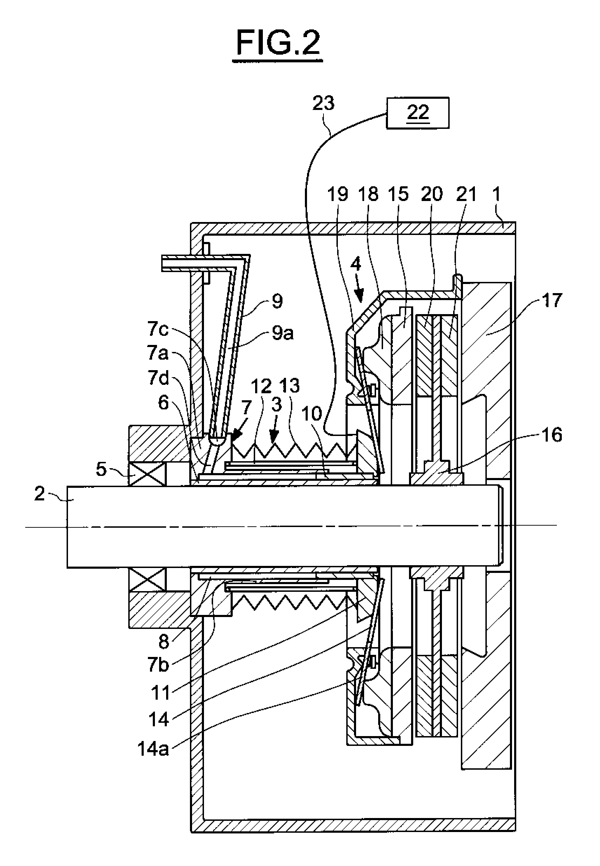

A titre d'exemple, un embrayage à commande hydraulique, de conception classique, et comprenant le dispositif de détection d'usure a été représenté schématiquement sur les figures 1 et 2. Il sera compris qu'un embrayage mécanique ou qu'un autre type de conception de l'embrayage, par exemple un embrayage comprenant un double volant moteur peuvent également convenir à la présente invention.

Un carter 1 d'embrayage comprend un arbre d'entrée 2 sur lequel sont montés des moyens de commande 3 d'embrayage permettant d'actionner un mécanisme d'embrayage, référencé 4 dans son ensemble, d'une position embrayée à une position débrayée. Le mécanisme d'embrayage 4 est représenté dans une position embrayée sur la figure 1 et dans une position débrayée sur la figure 2.

L'arbre d'entrée 2, s'étendant sensiblement horizontalement sui vant son axe, est monté à une extrémité du carter 1 d' embrayage par l'intermédiaire d'un roulement 5, par exemple un roulement à billes. Un tube guide 6 des moyens commande 3, disposé à proximité du roulement 5, est monté rigidement sur le carter 1, avec un jeu radial par rapport à l'arbre d'entrée 2 (non représenté).

Les moyens de commande 3 comprennent un récepteur de commande hydraulique constitué d'un corps 7 s'étendant axialement le long de l'arbre d'entrée 2 autour du tube guide 6, de longueur sensiblement inférieur à la longueur du tube guide 6. Le corps 7 est fixé au niveau d'une saillie radiale 7a au carter 1 d'embrayage. La saillie radiale 7a est prolongée par une partie tubulaire 7b ayant un diamètre intérieur sensiblement supérieur au diamètre extérieur du tube guide 6, définissant ainsi une chambre 8.

Un conduit d'arrivée 9 d'huile, fixé au carter d'embrayage 1 dans sa partie supérieure et s'étendant sensiblement radialement par rapport à l'arbre d'entrée 2, est monté rigidement à l'intérieur de la saillie radiale 7a du corps 7.

La chambre 8 est alimentée par l'intermédiaire d'un premier conduit d'alimentation 9a du conduit d'arrivée 9 relié à un évidement annulaire 7c de la saillie, l'évidemment annulaire 7c étant prolongé par un second conduit d'alimentation 7d débouchant dans la chambre 8.

A l'intérieur de la chambre 8, est disposé un piston 10 supportant à une extrémité en saillie de la chambre 8 une butée de commande 11 d'embrayage, pouvant par exemple être une butée de commande à roulement. Une extrémité d'un organe élastique 12 vient en appui contre la saillie radiale 7a du corps 7, l'autre extrémité de l'organe élastique 12 venant un appui sur la butée 11- Un soufflet 13 entourant l'organe élastique 12 est disposé entre la saillie radiale 7a et la butée 11.

Le récepteur de commande hydraulique est un récepteur de commande instrumenté permettant de relier la course de débrayage au couple transmissible par l'embrayage et de déterminer ainsi au préalable, par des essais expérimentaux, une calibration assurant un agrément optimisé lors des phases de démarrage ou de changement de vitesses. Le récepteur de commande hydraulique comprend également un capteur de position intégré (non représenté), pouvant être de type PLCD, apte à délivrer un signal de type sinusoïdal proportionnel au déplacement de la butée 11. Le capteur de position (non représenté) est constitué d'une bobine solidaire du corps 7 et d'un aimant accroché à la butée 11. Le capteur de position (non représenté) est relié à un moyen de calcul 22 situé à l'extérieur du carter 1 d'embrayage, par exemple un calculateur, par l'intermédiaire de la connexion 23.

Il est également envisageable de remplacer le capteur de position (non représenté) par un autre type de capteur de position, par exemple de type hydraulique, à l'extérieur du carter 1 d'embrayage.

La butée 11 est en contact, du côté opposé au soufflet 13, avec un diaphragme 14 du mécanisme d'embrayage 4. Le diaphragme 14, de conception connue, est un disque élastique conique dont l'intérieur est découpé suivant des rayons pour former des doigts 14a.

Le mécanisme d'embrayage 4 comprend un premier plateau de pression 15, un disque d'embrayage 16 monté coulissant sur l'arbre d'entrée 2, par exemple par l'intermédiaire de cannelures (non représentées), et un deuxième plateau de pression 17 constitué par le volant du moteur.

Le premier plateau de pression 15, comprenant des butées 18 en contact avec le diaphragme 14, est apte à coulisser à l'intérieur d'un carter 19 du mécanisme d'embrayage fixé au niveau du deuxième plateau de pression 17.

Le disque d'embrayage 16 comprend une première garniture 20 en regard du premier plateau de pression 15, une seconde garniture 21 en regard du second plateau de pression 17 et un ressort de progressivité (non représenté) interposé entre la première garniture 20 et la seconde garniture 21. Le ressort de progressivité permet, de façon connue, une transmission progressive du couple lors du passage d'une position débrayée à une position débrayée.

Le fonctionnement du mécanisme d'embrayage 4 est le suivant : les moyens de commande 3, par l'intermédiaire du piston 10, entraîne en translation la butée 11 d'une position de repos ou embrayée (figure 1) à une position active ou débrayée (figure 2). La butée 11 déforme les doigts 14a du diaphragme 14 qui s'appuie sur le carter 19 de façon à diminuer la force exercée par le diaphragme 14 jusqu'à la libération complète du disque d'embrayage 16, qui n'est plus en contact avec les premier et second plateau 15 et 17. Une translation de la butée 11 dans le sens inverse, d'une position active à une position de repos, provoque le coulissement du premier plateau 15 qui vient frotter le disque d'embrayage 16 par l'intermédiaire de la première garniture 20 et le serrer contre le second plateau 17 par l'intermédiaire de la seconde garniture 21.

Le capteur de position (non représenté) délivre un signal proportionnel au déplacement lors de la translation de la butée de commande 11, de type sinusoïdal.

Lors du retour de la butée 11 dans une position de repos, le signal émis par le capteur de position (non représenté) est reçu par le moyen de calcul 22. Le moyen de calcul 22, à partir de l'amplitude du signal émis, détermine la position de la butée 11 par rapport à une position de référence, qui est la position de la butée de commande lorsque l'embrayage est neuf.

La position de la butée 11 au repos lorsque l'embrayage est neuf a été mémorisée au préalable par le moyen de calcul 22 comme une position de référence correspondant à un état d'usure nul des garnitures 20 et 21. En outre, de manière expérimentale, par exemple sur banc d'essais selon des cycles normalisés d'usure de l'embrayage, on a déterminé, suivant les positions de la butée 11 au repos, l'amplitude du signal émis par le capteur (non représenté). Les différentes amplitudes du signal émis correspondant aux différentes positions de la butée 11 sont mémorisées par le moyen de calcul 22.

Pendant le fonctionnement de l'embrayage, suivant l'amplitude du signal émis par le capteur (non représenté), le moyen de calcul 22 est apte à déterminer le positionnement de la butée 11 par rapport à la position de référence. La distance entre la position réelle de la butée d'embrayage et la position de référence correspond à l'usure des garnitures 20 et 21. Le moyen de calcul 22, par comparaison de la position de la butée 11 au repos avec la position de référence de la butée 11, détermine ainsi une courbe liant l'usure des garnitures en fonction de la distance parcourue par le véhicule. Il est également possible de déterminer l'usure des garnitures en fonction du temps.

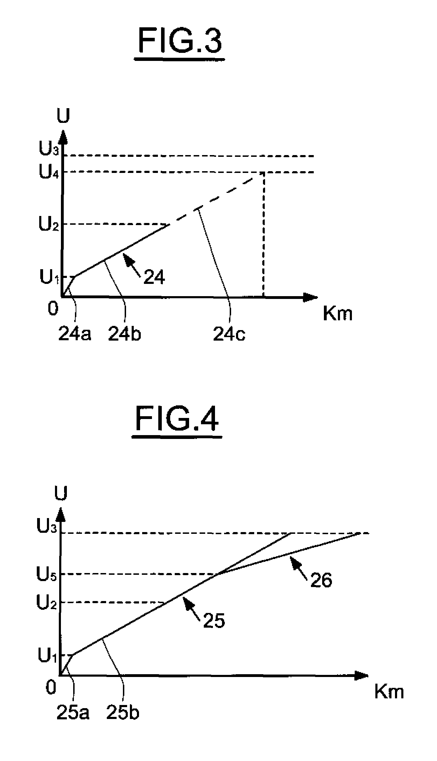

Sur la figure 3, la courbe 24 montre l'évolution de l'usure des garnitures 20 et 21 du disque d'embrayage 16 (figures 1 et 2) en fonction du nombre de la distance parcourue par le véhicule automobile.

Une première portion 24a de la courbe d'usure 24, d'une valeur d'usure nulle à une valeur d'usure U1, correspond à l'incrustation du ressort de progressivité disposé entre la première garniture 20 et la seconde garniture 21 du disque d'embrayage 16 (figures 1 et 2). Cette incrustation correspond à une première valeur d'usure U1 des garnitures. La valeur maximale de cette incrustation peut être déterminée de manière expérimentale, par exemple par des essais d'endurance, elle est classiquement de 0,1 mm.

Une seconde portion 24b de la courbe d'usure 24, de la valeur d'usure U1 à la valeur d'usure U2, présentant une pente inférieure à la pente de la première portion, correspond à l'usure des garnitures 20 et 21, du à la phase de frottements contre les plateaux 15 et 17 (fi gures 1 et 2). La seconde valeur d'usure U2 correspond ici à une mi-usure des garniture 20 et 21. La troisième valeur d'usure U3 représentée en ordonnée correspond à une usure complète des garnitures 20 et 21. L'épaisseur de garnitures disponible lorsque l'embrayage est neuf, appelée réserve d'usure, est mémorisée par le moyen de calcul 22.

Pour les véhicules automobiles destinés à être vendus à des entreprises afin de constituer leur parc automobile, appelée flotte, ou pour des véhicules utilitaires, il est possible de prévoir lorsqu'une opération de maintenance au niveau des garnitures de l'embrayage sera nécessaire.

Lors d'une opération d'entretien, des moyens d'affichage (non représentés), par exemple un afficheur au niveau du tableau de bord ou sous le capot du véhicule, informe le chargé d'entretien de la courbe d'usure déterminée par le moyen de calcul 22 (figures 1 et 2). Compte tenu que ces véhicules automobiles effectuent des parcours similaires ou reproductibles dans la durée, il est possible d'effectuer une extrapolation linéaire, afin de prévoir à quel moment l'usure des garnitures 20 et 21 (figures 1 et 2) atteindra une valeur correspondant à un point d'usure donné. Cette extrapolation linéaire est représentée schématiquement en pointillé par la troisième portion 24c de la courbe d'usure 24 de la deuxième valeur d'usure U2 à une quatrième valeur d'usure U4.

Il est possible de déterminer la distance restant à parcourir pour atteindre la valeur d'usure U4, représentant par exemple 90% de la valeur de la réserve d'usure. Cette donnée est mémorisée par le moyen de calcul 22 et peut être visualisée par le chargé d'entretien lors d'une prochaine visite pour déterminer si les garnitures 20 et 21 (figure 1) de l'embrayage sont usées et si l'embrayage doit être changé.

Pour des véhicules automobiles destinés à être vendus à des particuliers, il est envisageable que les moyens d'affichage puissent informer l'utilisateur du véhicule automobile, par exemple par un voyant ou un afficheur au tableau de bord, si l'usure des garnitures a atteint une valeur prédéterminée correspondant par exemple à 85% de la réserve d'usure, et qu'il est nécessaire d'effectuer une opération de maintenance au niveau de l'embrayage.

Sur la figure 4, les courbes 25 et 26 montrent l'évolution de l'usure des garnitures 20 et 21 du disque d'embrayage 16 (figures 1 et 2) en fonction da la distance parcourue par le véhicule automobile suivant une première et une seconde calibration des moyens de commande de l'embrayage.

D'une manière analogue à la figure 3, une première portion 25a de la courbe d'usure 25, d'une valeur d'usure nulle à la valeur d'usure U1, correspond à l'incrustation du ressort de progressivité. Une seconde portion 25b de la courbe d'usure 25, de la valeur d'usure U1 à la valeur d'usure U3, correspond à la phase de frottements contre les plateaux 15 et 17 (figures 1 et 2).

La courbe d'usure 26 est identique à la courbe d'usure 25 jusqu'à une cinquième valeur d'usure U5, ici comprise entre les valeurs d'usure U2 et U3. La courbe d'usure 26 présente ensuite une pente inférieure à la pente de la courbe 25 de la valeur d'usure U5 à la valeur d'usure U3.

Lorsque les moyens de calcul 22 (figure 1) déterminent que l'usure des garnitures a atteint une valeur prédéterminée, représentée par la valeur d'usure U5 correspondant par exemple à 70% de la réserve d'usure, les moyens d'affichage informent l'utilisateur du véhicule automobile. Il devient ainsi possible, en acceptant une dégradation du confort lors des phases de démarrage ou de changement de vitesses, de modifier la calibration du récepteur de commande hydraulique, en commandant par exemple une fermeture plus rapide de l'embrayage par la diminution du temps de patinage. La modification de calibration peut être effectuée à la convenance de l'utilisateur du véhicule automobile afin de limiter la dégradation du confort lors des phases de démarrage ou de changement de vitesses.

Grâce à cette modification de la vitesse de fermeture de l'embrayage 4, la phase de frottement des plateaux 15 et 21 sur les garnitures 20 et 21 se retrouve réduite. Il devient ainsi possible d'accroître le temps d'utilisation de l'embrayage avant que l'opération de maintenance soit nécessaire.

Avec un tel dispositif de détection d'usure des garnitures, il est possible d'optimiser les coûts d'exploitations, en réduisant la fréquence des opérations de maintenance nécessaire au niveau de l'embrayage. Il devient ainsi possible, sans démonter l'embrayage, de connaître l'état d'usure des garnitures d'embrayage, d'augmenter leur durée de vie en diminuant leurs usures et de prévoir lorsque l'embrayage devra être remplacé.

## Revendications

1. Dispositif de détection d'usure de garnitures (15, 21) d'un disque d'embrayage (16) de véhicule automobile, le disque d'embrayage coopérant avec une butée (11) de commande d'embrayage actionnée par des moyens de commande de serrage et de desserrage, la butée pouvant être déplacée entre une position de repos et une position active, **caractérisé par le fait qu'**il comprend un capteur de la position de la butée et un moyen de calcul (22) capable de comparer la position détectée de la butée (11) au repos, avec une position de référence de la butée (11) pour en déduire l'épaisseur instantanée des garnitures (15, 21).

2. Dispositif selon la revendication 1, **caractérisé par le fait que** la position de référence de la butée (11) est la position de la butée au repos lorsque les garnitures (15, 21) sont neuves.

3. Dispositif selon les revendications 1 ou 2, **caractérisé par le fait qu'**il comprend des moyens d'affichage pour fournir une information sur l'évolution dans le temps de l'épaisseur des garnitures (15, 21).

4. Dispositif selon l'une quelconque des revendications précédentes, **caractérisé par le fait que** le moyen de calcul (22) reçoit un signal émis par le capteur, le moyen de calcul (22) étant sensible à l'amplitude du signal émis afin de comparer la position détectée de la butée avec la position de référence de la butée.

5. Dispositif selon l'une quelconque des revendications précédentes, **caractérisé par le fait que** le moyen de calcul (22) comprend des moyens de détermination d'une courbe d'usure (24) liant l'usure des garnitures (15, 21) à la distance parcourue par le véhicule.

6. Dispositif selon la revendication 5, **caractérisé par le fait que** les moyens d'affichage sont capables de fournir une information à l'utilisateur du véhicule lorsque la courbe d'usure (24) atteint une valeur seuil prédéterminée.

7. Procédé de gestion de disque d'embrayage de véhicule automobile, le disque d'embrayage coopérant avec une butée de commande d'embrayage actionnée par des moyens de commande de serrage et de desserrage, la butée pouvant être déplacée entre une position de repos et une position active, dans lequel :
- on compare la position de la butée à une position de référence de ladite butée,
- on détermine l'usure des garnitures du disque d'embrayage en fonction de l'écart entre la position de la butée et la position de référence de ladite butée, et
- on détermine une courbe d'usure liant l'usure des garnitures à la distance parcourue.

8. Procédé selon la revendication 7, dans lequel :
- on effectue une extrapolation de la courbe d'usure, et
- on détermine à partir de l'extrapolation de la courbe d'usure, une distance restant à parcourir pour atteindre une valeur limite d'usure des garnitures de façon à prévoir le moment où une opération de maintenance sur l'embrayage devient nécessaire.

9. Procédé selon la revendication 7, dans lequel on modifie la calibration des moyens de commande lorsque l'usure des garnitures atteint une valeur prédéterminée de façon à réduire la vitesse d'usure des garnitures de l'embrayage.

10. Procédé selon la revendication 9, dans lequel on modifie la calibration des moyens de commande par une fermeture plus rapide de l'embrayage.

11. Procédé selon l'une quelconque des revendications 7 à 10, dans lequel on effectue une comparaison de la position de la butée de commande d'embrayage par rapport à une position de référence de ladite butée dans une position de repos.

12. Procédé selon l'une quelconque des revendications 7 à 11, appliqué à un ensemble de véhicules, dont chacun des véhicules effectue des parcours similaires dans le temps.
